# EUROPÄISCHE PATENTANMELDUNG

(11) **EP 0 827 770 A2**
(43) Veröffentlichungstag der Anmeldung: **11.03.1998**
(21) Anmeldenummer: 97114266.6
(22) Anmeldetag: 19.08.1997
(51) Int. Cl.: B01D 53/02, B01D 53/04, B01J 20/34, C01B 31/08

(54) **Verfahren und Vorrichtung zur Desorption von Adsorbern**

(30) Priorität: 04.09.1996 DE 19635817
(71) Anmelder: MESSER GRIESHEIM GMBH, 60547 Frankfurt (DE)
(72) Erfinder: Grabhorn, Hermann, Dr., 40474 Düsseldorf (DE); Herzog, Friedhelm, Dr., 47799 Krefeld (DE); Schulte-Rewinkel, Martin, 47798 Krefeld (DE)

(57) **Zusammenfassung**

Bei einem Verfahren zur Desorption von ein oder mehreren Adsorbern (1) mit einem im Kreislauf geführten gasförmigen Desorptionsmittel wird a) gasförmiges Desorptionsmittel erhitzt und dem Adsorber (1) zugeführt und so der Adsorber aufgeheizt, b) danach das mit Schadstoffen beladene Desorptionsmittel aus dem Adsorber abgeführt und in zwei Teilströme aufgeteilt, c) der erste Teilstrom des mit Schadstoffen beladenen Desorptionsmittels aus dem Adsorber gemäß der Verfahrensstufe a) wieder erhitzt und dem Adsorber wieder zugeführt, d) der zweite Teilstrom des mit Schadstoffen beladenen Desorptionsmittels aus dem Adsorber aus dem Desorptionsmittel- Kreislauf abgeführt und e) zum Ende der Desorptionszeit des Adsorbers gasförmiges Desorptionsmittel dem Desorptionsmittel-Kreislauf zugeführt und/oder das Abführen des zweiten Teilstroms des mit Schadstoffen beladenen Desorptionsmittels aus dem Desorptionsmittel-Kreislauf gemäß der Verfahrensstufe d) unter Anlegen eines Vakuums durchgeführt.

## Beschreibung

Die Erfindung betrifft ein Verfahren zur Desorption von einem oder mehreren Adsorbern nach dem Oberbegriff des Anspruchs 1 sowie eine für die Durchführung des Verfahrens geeignete Vorrichtung.

Abgase, die mit Schadstoffen beladen sind, werden zur Reinigung Adsorbern zugeführt, in denen ihnen die Schadstoffe entzogen werden. Sind die Adsorptionskapazitäten des Adsorptionsmittels ausgeschöpft, so muß es durch Desorption regeneriert werden. Dies geschieht, indem es mit einem Strom eines Desorptionsgases beaufschlagt wird. Als Desorptionsgase finden sowohl Wasserdampf als auch heißes Stickstoffgas Verwendung. Bei der Verwendung von Stickstoff werden nach der Desorption die Desorptionsgase durch Kondensation und/oder Ausfrieren von ihrer Schadstoffbeladung befreit. Das Desorptionsgas wird dabei im Kreislauf geführt. Nachteilig bei diesen Verfahren nach dem Stand der Technik ist es, daß das Desorptionsgas zuerst aufgeheizt wird, damit die Schadstoffe überhaupt aus dem Adsorber ausgetragen werden können und nach Verlassen des Adsorbers abgekühlt wird, um die Schadstoffe zu kondensieren bzw. auszufrieren.

Der Erfindung liegt die Aufgabe zugrunde, ein Verfahren und eine Vorrichtung zu schaffen, mit denen die Regeneration eines schadstoffbeladenen Adsorbers mit einem relativ geringen Energieaufwand möglich ist.

Ausgehend von dem im Oberbegriff des Anspruchs 1 berücksichtigten Stand der Technik ist die Aufgabe erfindungsgemäß durch ein Verfahren gelöst, welches dadurch gekennzeichnet ist, daß a) gasförmiges Desorptionsmittel erhitzt und dem Adsorber zugeführt wird, wodurch der Adsorber aufgeheizt wird, b) danach das mit Schadstoffen beladene Desorptionsmittel aus dem Adsorber abgeführt wird und in zwei Teilströme aufgeteilt wird, c) der erste Teilstrom des mit Schadstoffen beladenen Desorptionsmittels aus dem Adsorber gemäß der Verfahrensstufe a) wieder erhitzt und dem Adsorber wieder zugeführt wird, d) der zweite Teilstrom des mit Schadstoffen beladenen Desorptionsmittels aus dem Adsorber aus dem Desorptionsmittel-Kreislauf abgeführt wird und e) zum Ende der Desorptionszeit des Adsorbers gasförmiges Desorptionsmittel dem Desorptionsmittel-Kreislauf zugeführt wird und/oder das Abführen des zweiten Teilstroms des mit Schadstoffen beladenen Desorptionsmittels aus dem Desorptionsmittel-Kreislauf gemäß der Verfahrensstufe d) unter Anlegen eines Vakuums erfolgt.

Während der Desorption des Adsorbers entstehen hoch schadstoffhaltige Dämpfe. Der Anteil an Dampf im Desorptionsmittel-Kreislauf wird während des Aufheizens und der steigenden Desorption des Adsorbers größer und kann soweit ansteigen, daß das Desorptionsmittel im Desorptionsmittel-Kreislauf hoch schadstoffhaltig ist und zum überwiegenden Teil aus Dampf besteht. Der im Desorptionsmittel-Kreislauf geführte erste Teilstrom, welcher noch eine relativ hohe Temperatur aufweist, kann dann mit einem relativ geringen Energieaufwand auf die zur weiteren Aufheizung des Adsorbers oder die zur Aufrechterhaltung der Temperatur bzw. Desorption des Adsorbers benötigte Temperatur erhitzt werden. Gegenüber den Verfahren nach dem Stand der Technik, bei denen der gesamte Volumenstrom zunächst abgekühlt werden muß, um die Schadstoffe auszukondensieren und danach wieder erhitzt wird, ist eine Energieeinsparung möglich. Daher kann die Desorption des Adsorbers gemäß der Erfindung auf vergleichsweise wirtschaftliche Weise erfolgen. Zum Ende der Desorption wird dem Desorptionsmittel-Kreislauf gasförmiges Desorptionsmittel zugeführt und das System gespült, damit der Adsorber anschließend wieder mit Rohgas beaufschlagt werden kann. Anstatt des Spülens mit Desorptionsmittel ist es ebenso möglich, an den zweiten Teilstrom des mit Schadstoffen beladenen Desorptionsmittels aus dem Desorptionsmittel-Kreislauf gemäß der Verfahrensstufe d) ein Vakuums anzulegen und so die restlichen Schadstoffe aus dem Adsorber zu entfernen.

Als Desorptionsmittel werden vorzugsweise nicht brennbare, tiefkalte verflüssigte Gase, wie beispielsweise Stickstoff, Argon oder Helium, eingesetzt. Es können jedoch auch andere Desorptionsmittel, verwendet werden, welche die thermodynamischen Voraussetzungen erfüllen. Gemäß einer bevorzugten Ausführungsform der Erfindung wird Stickstoff als Desorptionsmittel eingesetzt.

Der während der Desorption der Adsorber entstehende Dampf wird vorteilhaft in einer ein- oder mehrstufigen Kondensationsanlage niedergeschlagen. Unter dem Begriff "Kondensationsanlage" im Sinne der Erfindung ist jede beliebige Vorrichtung zu verstehen, die es ermöglicht, unter Nutzung des Kälteinhaltes eines Kondensationsmittels eine Trennung der Schadstoffe aus dem Desorptionsmittel herbeizuführen. Es ist vorteilhaft, zur Kondensation das zur Desorption verwendete, noch nicht erhitzte Desorptionsmittel, zu verwenden. Daher ist es vorgesehen, eine mehrstufige Kondensationsanlage mit einer Vorkondensation und einer anschließenden Kryokondensation einzusetzen. Eine technisch ausreichende Vorkondensation kann beispielsweise durch Kühlung mit Wasser bzw. Brunnenwasser und/oder durch eine Kältemaschine bzw. vor Ort vorhandene Kühlsole erfolgen.

Nach der Erfindung ist es vorgesehen, daß das die Kondensationsanlage verlassende gasförmige Desorptionsmittel dem Rohgasstrom zugeführt wird, der zur Adsorption in den Adsorber geleitet wird, der im Adsorptionsbetrieb arbeitet oder daß das die Kondensationsanlage verlassende gasförmige Desorptionsmittel dem Desorptionsmittel im Desorptionsmittel-Kreislauf zugeführt wird, welches zur Desorption in den Adsorber geleitet wird, der im Desorptionsbetrieb arbeitet. Durch diese Verfahrensführung werden im Desorptionsmittel eventuell vorhandene Schadstoffe nicht in die Umgebung ausgetragen. Ist die letzte Kondensationsstufe, beispielsweise eine Kryokondensationsstufe, so ausgelegt, daß die Schadstoffe aus dem Desorptionsgasstrom nahezu vollständig entfernt werden und deren Menge unterhalb der geforderten Grenzwerte bleibt, so kann das Desorptionsmittel aber auch in die Umgebung abgeleitet werden.

Gemäß einer weiteren Ausführungsform der Erfindung wird ein in dem Adsorber entstehender Druck durch ein Ventil entspannt und Verluste an Desorptionsmittel werden durch Zuführung von Desorptionsmittel in den Kreislauf kompensiert.

Nach der Erfindung ist vorgesehen, daß das gasförmige Desorptionsmittel mindestens einem ersten Adsorber einer Adsorptionsanlage zugeführt wird, während einem zweiten Adsorber Rohgas zugeführt wird und daß anschließend nach erfolgter Desorption des ersten Adsorbers diesem Rohgas zugeführt wird, während dem zweiten Adsorber das gasförmige Desorptionsmittel zugeführt wird. Es ist aber ebenso möglich, daß das gasförmige Desorptionsmittel einem kontinuierlich arbeitenden Adsorber zugeführt wird. Bei nicht kontinuierlich anfallenden Abgasströmen ist es auch denkbar, daß nur ein Adsorber verwendet wird, der bei anstehendem schadsfoffbeladenen Abgas im Adsorptionsbetrieb arbeitet und in Zeiten, in denen kein schadstoffbeladenes Abgas ansteht, erfindungsgemäß desorbiert wird.

Nach der Erfindung kann der Adsorber durch den heißen Gasstrom des Desorptionsmittels, direktes Heizen und/oder Evakuieren desorbiert werden.

Das erfindungsgemäße Verfahren wird vorteilhaft mit Hilfe einer Vorrichtung durchgeführt, die mit mindestens einem Adsorber, mindestens einer Eingangsleitung und mindestens einer Ausgangsleitung für das zu reinigende Gas, mindestens einer Eintrittsleitung und mindestens einer Austrittsleitung besteht, bei der in der Eintrittsleitung für das Desorptionsmittel eine Heizvorrichtung angeordnet ist und die dadurch gekennzeichnet ist, daß die aus dem Adsorber führende Austrittsleitung vor oder nach einer Vorrichtung zur Aufrechterhaltung eines Desorptionsmittel-Kreislaufs verzweigt ist. Die Desorptionsanlage besteht vorteilhaft aus einer Vorkondensationsanlage und einer Kryokondensationsanlage. Dann ist es vorteilhaft, daß das aus der Kryokondensation kommende, vorwiegend gasförmige Desorptionsmittel zuerst einem Zwischenspeicher zugeführt wird, wobei es aus dem Zwischenspeicher dem Desorptionsmittel-Kreislauf bei Bedarf zugeführt werden kann. In der Eintrittsleitung für das Desorptionsmittel kann zusätzlich zu der Heizvorrichtung auch eine Kühlvorrichtung angeordnet sein, um die Temperatur des Desorptionsmittels im Desorptionsmittel-Kreislauf genau einstellen zu können. Als Vorrichtung zur Aufrechterhaltung des Desorptionsmittel-Kreislaufs ist es erfindungsgemäß vorgesehen, ein Gebläse, einen Kompressor oder eine Pumpe zu verwenden. Nach der Erfindung kann der Adsorber bzw. die Adsorptionsanlage auch ein Ventil aufweisen, wodurch überschüssiges Desorptionsmittel ausströmen kann. Schließlich ist es von Vorteil, wenn in dem Desorptionsmittel-Kreislauf eine Reinigungsvorrichtung für das gasförmige Desorptionsmittel vorgesehen ist.

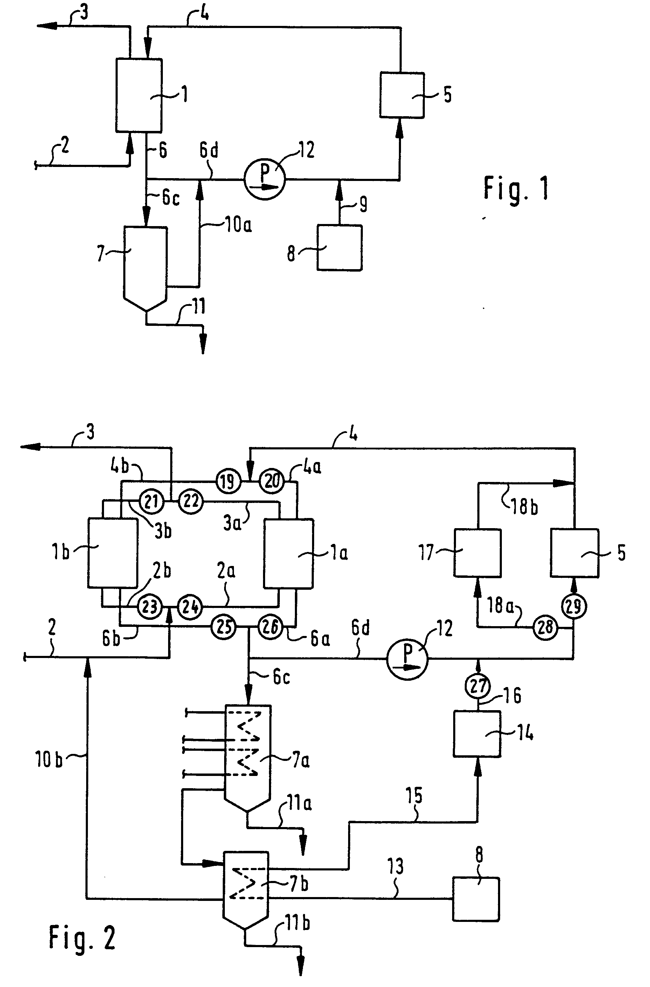

Das erfindungsgemäße Verfahren und die erfindungsgemäße Vorrichtung wird nun anhand von einem Ausführungsbeispiel und von zwei Abbildungen (Fig. 1 und Fig. 2) beispielhaft näher erläutert.

### Beispiel:

Ein Adsorber, der mit einem Rohgasstrom von ca. 30000 m³/h mit einem Dampfanteil von ca. 6 g/ m³ für eine Zeitdauer von ca. 5 h beaufschlagt wurde, wird durch eine ebensolange Desorptionszeit unter Kreislaufführung von ca. 20000 m³/h Stickstoff als Desorptionsmittel regeneriert. Vor Einleitung in den Adsorber wird das Desorptionsmittel auf eine Temperatur von ca. 200 °C aufgeheizt. Nach Verlassen des Adsorbers beträgt die Temperatur des Desorptionsmittels noch ca. 20°C zu Anfang und 180 °C am Ende der Desorptionszeit. Auf die benötigte Temperatur wird nur das im Desorptionsmittel-Kreislauf befindliche Desorptionsmittel des ersten Teilstroms wieder erhitzt und dem Adsorber zugeführt. Das im Kreislauf geführte Desorptionsmittel besteht anfangs aus ca. größer 90 % gasförmiger Phase. Während der Aufheizung wird der Gehalt an hoch schadstoffhaltigem Dampf immer größer, bis der aus dem Kreislauf abgezogene zweite Teilstrom an Desorptionsmittel von ca. 200 kg/h fast vollständig aus einer Dampfphase besteht. Gegen Ende der Desorptionszeit ist das im Kreislauf geführte Desorptionsmittel zu ca. größer 90 % dampfförmig. Nach der Desorptionsphase wird der Anteil an Dampf wieder geringer. Mit dem erfindungsgemäßen Verfahren wird nur eine relativ geringe Energiemenge zum Aufheizen des Desorptionsmittels im Kreislauf benötigt, da der im Kreislauf geführte erste Teilstrom des Desorptionsmittels vor der Erhitzung nicht abgekühlt werden muß. Darüber hinaus können der zur Desorption verwendete Stickstoff oder andere, hochwertige und zur Desorption geeignete Gase besonders wirtschaftlich genutzt werden. Ein Auskondensieren bzw. Ausfrieren der Schadstoffe aus dem beladenen Desorptionsgas kann durch Einbeziehung der tiefen Kälte des flüssigen Gases besonders effektiv erfolgen.

Fig. 1 zeigt eine Vorrichtung zur Durchführung des Verfahrens mit einem Adsorber und einer einstufigen Kondensationsanlage.

In Fig. 2 ist eine Vorrichtung zur Durchführung des Verfahrens mit zwei Adsorbern und einer mehrstufigen Kondensationsanlage dargestellt.

Fig. 1 zeigt einen Adsorber (1) mit einer Eingangsleitung (2) für Gas, das mit Schadstoffen beladen ist und einer Ausgangsleitung (3) für das gereinigte Gas. Der Adsorber (1) ist über eine Leitung (4) mit einer Heizvorrichtung (5) verbunden. Über eine Leitung (6) wird das Desorptionsmittel aus dem Adsorber (1) geführt. Die Leitung (6) ist verzweigt in eine Leitung (6c), die mit einer Kondensationsanlage (7) verbunden ist und eine Leitung (6d), in der das Desorptionsmittel über die Heizvorrichtung (5) in den Adsorber (1) zurückgeführt wird. Das Desorptionsmittel wird aus einem Vorratsbehälter (8) über die Leitung (9) der Leitung (6d) zugeführt. Das aus der Kondensationsanlage (7) kommende und von Schadstoffen befreite Gas kann entweder an die Umgebung abgeführt werden oder über Leitung (10) dem Rohgasstrom in der Leitung (2) zugeführt werden. Das in der Kondensationsanlage (7) anfallende Kondensat wird über einen Kondensatablaß (11) einer Verwertung bzw. Entsorgung zugeführt. Zur Aufrechterhaltung des Desorptionsmittel-Kreislaufs kann ferner ein Gebläse (12) im Kreislauf angeordnet sein. Das Gebläse (12) ist hier vor der Heizvorrichtung (5) in der Leitung (6d) angeordnet. Es ist ebenso möglich, das Gebläse (12) in der Leitung (4) nach der Heizvorrichtung (5) anzuordnen.

Bei dem erfindungsgemäßen Verfahren ist es vorteilhaft, mehrere Adsorber im Wechselbetrieb zu betreiben. Im Wechselbetrieb werden die Adsorber alternierend zur Reinigung des Rohgases eingesetzt und anschließend zur Regenerierung desorbiert. Daher besteht die Adsorptionsanlage (1) oft zumindest aus zwei Adsorbern. Zudem ist es von Vorteil, wenn die Kondensationsanlage (7) mehrstufig aufgebaut ist. Eine derartige Vorrichtung ist in der Fig. 2 dargestellt. Hier werden zwei Adsorber (1a, 1b) verwendet. Zum Betreiben im Wechselbetrieb sind bei den Adsorbern (1a, 1b) die Eingangsleitung für das Rohgas (2) in zwei Eingangsleitungen (2a, 2b), die Ausgangsleitung für das Reingas (3) in zwei Ausgangsleitungen (3a, 3b), die Zuleitung für das Desorptionsmittel (4) in zwei Zuleitungen (4a, 4b) und die Ausleitung des mit Schadstoffen beladenen Desorptionsmittels (6) in zwei Ausleitung (6a, 6b) aufgeteilt. Die Steuerung des Desorptionsmittel-Kreislaufs bzw. des Rohgas- und Reingasstroms erfolgt über in diesen Leitungen angeordnete Absperr- oder Regelvorrichtungen (19, 20, 21, 22, 23, 24, 25, 26). Die Kondensationsanlage ist als mehrstufige Anlage aufgebaut. Sie besteht aus einer Vorkondensation (7a) mit Wasser als Kühlmedium. Wie es hier dargestellt ist, kann die Vorkondensation (7a) auch mit zwei Kondensationsstufen, beispielsweise eine Stufe mit Kühlwasser und eine zweite Stufe mit Brunnenwasser, betrieben werden. Als weitere, der Vorkondensation (7a) nachgeschalteten Stufe ist eine Kryokondensation (7b) vorgesehen. Die anfallenden Kondensate können über jeweils einen Kondensatablaß (11a sowie 11b) einer Verwertung bzw. Entsorgung zugeführt werden. Das aus der Kryokondensation (7b) kommende Gas kann über eine Leitung (10b) dem Rohgasstrom in der Leitung (2) zugeführt werden. Das Gas kann aber auch entsprechend der in Fig. 1 gezeigten Vorrichtung dem Desorptionsmittel im Desorptionsmittel-Kreislauf zugeführt werden oder an die Umgebung abgeführt werden, was hier nicht dargestellt ist. Die Kryokondensation (7b) wird mit dem Desorptionsmittel betrieben, das aus einem tiefkalten Desorptionsmittel-Vorrat (8) über Leitung (13) bezogen wird. Ferner ist ein Zwischenspeicher (14) für das Desorptionsmittel vorgesehen, der mit einer Leitung (15) verbunden ist, wodurch das aus der Kryokondensationsstufe (7b) kommende, großteils gasförmige Desorptionsmittel zugeführt wird. Aus dem Zwischenspeicher (14) kann das Desorptionsmittel über eine Leitung (16) dem Desorptionsmittel-Kreislauf zugeführt werden, wobei die Steuerung über eine in der Leitung (16) angeordnete Absperr- oder Regelvorrichtung (27) erfolgt. Als weitere, mögliche Vorrichtungsvariante kann parallel zu der Heizvorrichtung (5) eine Kühlvorrichtung (17) angeordnet sein, die über Leitungen (18a, 18b) mit dem Desorptionsmittel-Kreislauf verbunden ist. Im Bedarfsfall kann die Kühlvorrichtung (17) mit Hilfe der in den Leitungen (6d) und (18a) angeordneten Absperr- oder Regelvorrichtungen (28, 29) in den Desorptionsmittel-Kreislauf geschaltet werden. Durch die Kühlvorrichtung (17) kann das Desorptionsmittel des Desorptionsmittel-Kreislaufs im Bedarfsfall auf eine bestimmte Temperatur eingestellt werden.

Die Vorrichtung der Fig. 2 kann bei diskontinuierlich anfallendem Abluftstrom auch mit einem einsträngigen Adsorber (nur 1a) ausgeführt sein. Eine Voraussetzung hierfür ist, daß beim Austritt aus der Kryokondensationsanlage (7b) die Beladung des Desorptionsgases den erforderlichen Emissionsgrenzwerten entspricht, wenn dieses an die Umgebung abgegeben wird. Der Stickstoff als Desorptionsmittel kann grundsätzlich einem tiefkalten Desorptionsmittel-Vorrat (8) entnommen werden oder als Stickstoffquelle kann eine Druck-Wechsel-Adsorptionsanlage in Verbindung mit einem Kaltgasmischer eingesetzt werden. Bei allen Varianten des erfindunsgemäßen Verfahrens kann überschüssiges, gasförmiges Desorptionsmittel, beispielsweise Stickstoff, anfallen. Dieses ist für andere Zwecke nutzbar. So kann Stickstoff beispielsweise für Inertisierungszwecke anderer Verfahren verwendet werden.

## Patentansprüche

1. Verfahren zur Desorption von ein oder mehreren Adsorbern (1), bei dem temperiertes, gasförmiges Desorptionsmittel in einem Kreislauf über das Adsorptionsmaterial geleitet wird,
durch die folgenden Verfahrenschritte gekennzeichnet,
a) gasförmiges Desorptionsmittel wird erhitzt und dem Adsorber (1) zugeführt, wodurch der Adsorber (1) aufgeheizt wird,
b) danach wird das mit Schadstoffen beladene Desorptionsmittel aus dem Adsorber (1) abgeführt und in zwei Teilströme aufgeteilt,
c) der erste Teilstrom des mit Schadstoffen beladenen Desorptionsmittels aus dem Adsorber (1) wird gemäß der Verfahrensstufe a) wieder erhitzt und dem Adsorber (1) wieder zugeführt,
d) der zweite Teilstrom des mit Schadstoffen beladenen Desorptionzmittels aus dem Adsorber (1) wird aus dem Desorptionsmittel- Kreislauf abgeführt und
e) zum Ende der Desorptionszeit des Adsorbers (1) wird gasförmiges Desorptionzmittel dem Desorptionsmittel-Kreislauf zugeführt und/oder das Abführen des zweiten Teilstroms des mit Schadstoffen beladenen Desorptionsmittels aus dem Desorptionsmittel-Kreislauf gemäß der Verfahrensstufe d) erfolgt unter Anlegen eines Vakuums.

2. Verfahren nach Anspruch 1,
dadurch gekennzeichnet,
daß der zweite Teilstrom des mit Schadstoffen beladenen Desorptionsmittels aus der Verfahrensstufe d) einer ein- oder mehrstufigen Kondensationsanlage (7) zugeführt wird.

3. Verfahren nach Anspruch 2,
dadurch gekennzeichnet,
daß der zweite Teilstrom des mit Schadstoffen beladenen Desorptionsmittels aus der Verfahrensstufe d) einer mehrstufigen Kondensationsanlage zugeführt wird, die aus einer ein- oder mehrstufigen Vorkondensation (7a) und einer anschließenden Kryokondensation (7b) besteht.

4. Verfahren nach Anspruch 2 oder 3,
dadurch gekennzeichnet,
daß das die Kondensationsanlage (7) verlassende gasförmige Desorptionsmittel dem Rohgasstrom zugeführt wird, der zur Adsorption in den Adsorber (1) geleitet wird, der im Adsorptionsbetrieb arbeitet oder daß das die Kondensationsanlage (7) verlassende gasförmige Desorptionsmittel dem Desorptionsmittel im Desorptionsmittel-Kreislauf zugeführt wird, welches zur Desorption in den Adsorber (1) geleitet wird, der im Desorptionsbetrieb arbeitet.

5. Verfahren nach einem der Ansprüche 1 bis 4,
dadurch gekennzeichnet,
daß ein in dem Adsorber (1) enstehender Druck durch ein Ventil entspannt wird und Verluste an Desorptionsmittel durch Zuführung von Desorptionsmittel in den Desorptionsmittel-Kreislauf kompensiert werden.

6. Verfahren nach einem der Ansprüche 1 bis 5,
dadurch gekennzeichnet,
daß das gasförmige Desorptionsmittel mindestens einem ersten Adsorber (1a) einer Adsorptionsanlage zugeführt wird, während einem zweiten Adsorber (1b) Rohgas zugeführt wird und daß anschließend nach erfolgter Desorption des ersten Adsorbers (1a) diesem Rohgas zugeführt wird, während dem zweiten Adsorber (1b) das gasförmige Desorptionsmittel zugeführt wird.

7. Verfahren nach einem der Ansprüche 1 bis 6,
dadurch gekennzeichnet,
daß der Adsorber (1) durch den heißen Gasstrom des Desorptionsmittels und/oder direktes Heizen aufgeheizt wird.

8. Verfahren nach einem der Ansprüche 1 bis 9,
dadurch gekennzeichnet,
daß als Desorptionsmittel Stickstoff eingesetzt wird.

9. Vorrichtung mit mindestens einem Adsorber (1), mindestens einer Eingangsleitung (2) und mindestens einer Ausgangsleitung (3) für das zu reinigende Gas, mindestens einer Eintrittsleitung (4) und mindestens einer Austrittsleitung (6) für gasförmiges Desorptionsmittel, bei der in der Eintrittsleitung (4) für das Desorptionsmittel eine Heizvorrichtung (5) oder eine Heizvorrichtung (5) und eine Kühlvorrichtung (17) angeordnet ist,
dadurch gekennzeichnet,
daß die aus dem Adsorber (1) führende Austrittsleitung (6) vor oder nach einer Vorrichtung zur Aufrechterhaltung eines Desorptionsmittelkreislaufs (12) verzweigt ist.

10. Vorrichtung nach Anspruch 9,
dadurch gekennzeichnet,
daß die Desorptionsanlage aus einer ein- oder mehrstufigen Vorkondensationsanlage (7a) und einer Kryokondensationsanlage (7b) besteht.

11. Vorrichtung nach Anspruch 10,
dadurch gekennzeichnet,
daß die Kryokondensationsanlage (7b) eine Stickstoff- Kryokondensationsanlage ist.
